(19) Europäisches Patentamt
European Patent Office
Office européen des brevets

(11) **EP 3 581 898 B1**

(12) **EUROPÄISCHE PATENTSCHRIFT**

(45) Veröffentlichungstag und Bekanntmachung des Hinweises auf die Patenterteilung:
**29.07.2020 Patentblatt 2020/31**

(51) Int Cl.:
***G01J 1/44*** *(2006.01)*     ***G01N 21/3504*** *(2014.01)*
***G01J 1/02*** *(2006.01)*

(21) Anmeldenummer: **18177605.5**

(22) Anmeldetag: **13.06.2018**

(54) **ELEKTRONISCHE ANORDNUNG, OPTISCHER GASSENSOR UMFASSEND EINE SOLCHE ELEKTRONISCHE ANORDNUNG UND VERFAHREN ZUR KOMBINIERTEN FOTOSTROM- UND TEMPERATURMESSUNG MITTELS EINER SOLCHEN ELEKTRONISCHEN ANORDNUNG**

ELECTRONIC ASSEMBLY, OPTICAL GAS SENSOR COMPRISING SUCH AN ELECTRONIC ASSEMBLY AND METHOD FOR COMBINED PHOTOCURRENT AND TEMPERATURE MEASURING USING SUCH AN ELECTRONIC ASSEMBLY

DISPOSITIF ÉLECTRONIQUE, CAPTEUR OPTIQUE DE GAZ COMPRENANT UN TEL DISPOSITIF ÉLECTRONIQUE ET PROCÉDÉ DE MESURE DE COURANT PHOTOÉLECTRIQUE ET DE TEMPÉRATURE COMBINÉE AU MOYEN D'UN TEL DISPOSITIF ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(72) Erfinder: **WEILGUNI, Michael**
**4232 Hagenberg (AT)**

(74) Vertreter: **Maikowski & Ninnemann Patentanwälte Partnerschaft mbB Postfach 15 09 20 10671 Berlin (DE)**

(43) Veröffentlichungstag der Anmeldung:
**18.12.2019 Patentblatt 2019/51**

(73) Patentinhaber: **E+E ELEKTRONIK GES.M.B.H.**
**4209 Engerwitzdorf (AT)**

(56) Entgegenhaltungen:
**DE-B3-102004 049 855    US-A1- 2004 052 299**

**Beschreibung**

Die vorliegende Erfindung betrifft eine elektronische Anordnung sowie einen optischen Gassensor, der eine solche elektronische Anordnung umfasst. Außerdem betrifft diese Erfindung ein Verfahren zur kombinierten Fotostrom- und Temperaturmessung unter Verwendung einer derartigen elektronischen Anordnung. Dabei können die erfindungsgemäßen Vorrichtungen und das erfindungsgemäße Verfahren insbesondere im Zusammenhang mit optischen Gassensoren, welche Strahlung im mittleren Infrarot-Bereich verwenden, zum Einsatz kommen.

Die Messung von Strahlung im mittleren Infrarot-Bereich (MIR) mit Hilfe von Fotodioden ist eine zukunftsträchtige Alternative zu bisherigen Technologien (z. B. Thermopiles oder Pyrodetektoren) für die optische Detektion von Gasen wie z. B. $CO_2$. So sind heutige Fotodioden bei kleinerer Detektorfläche bereits um den Faktor 3 empfindlicher als Thermopiles. Nachteilig weisen Fotodioden prinzipbedingt eine sehr große Temperaturabhängigkeit der Fotoempfindlichkeit auf. Um MIR-Fotodioden über einen weiten Temperaturbereich in Gassensoren einsetzen zu können, ist daher eine genaue Messung der Temperatur (idealerweise direkt an der Fotodioden-Junction) notwendig.

Einige kommerziell erhältliche Detektormodule messen die Umgebungstemperatur über einen Microcontroller. Ein Nachteil dieser Methode besteht darin, dass die Temperaturmessung für einen erweiterten Temperaturbereich zu ungenau ist. Differenzen zwischen Fotodioden- und Mikrocontrollertemperatur von wenigen 1/10 °C können zu erheblichen Fehlern bei der Bestimmung der Gaskonzentration führen.

In der WO 2009/019467 A1 wird ein optischer Gassensor mit einer MIR-Fotodiode beschrieben, wobei eine Temperaturmessung mittels der Fotodiode selbst erfolgt. Diese Messung beruht auf einer Flussspannungsmessung bei Konstantstrom, d. h. auf einer Messung im ersten Quadranten der Strom-Spannungs-Charakteristik der Fotodiode.

Die DE 10 2012 007 016 B3 schlägt vor, bei einem optischen Gassensor das temperaturabhängige Verhalten einer Fotodiode zur Temperaturbestimmung zu nutzen. Das Messprinzip beruht ebenfalls auf einer Flussspannungsmessung bei Konstantstrom.

In der EP 3 051 274 A1 wird vorgeschlagen, eine Fotodiode eines optischen Gassensors zugleich als Temperatursensor zu benutzen. Dazu wird in Sperrrichtung ein Strom eingeprägt und die temperaturabhängige Sperrspannung gemessen. Der Fotostrom macht sich dann ebenfalls als Spannung in Flussrichtung bemerkbar, die AC-gekoppelt verstärkt wird. Dabei hängt die gemessene Spannung nichtlinear vom Fotostrom ab. Weiterer Stand der Technik ist bekannt aus US2004/052299 A1 und DE102004049855 B3.

Nachteilig an bekannten Gassensoren ist zum einen die vergleichsweise ungenaue Messung der Fotodiodentemperatur, falls die Temperatur mit einem zusätzlichen Sensor bestimmt wird, und zum anderen eine vergleichsweise aufwändige Schaltungstechnik für die kombinierte Messung der Fotodiodentemperatur und des Fotostroms.

Hiervon ausgehend liegt der Erfindung das Problem zugrunde, eine elektronische Anordnung sowie ein Verfahren zur kombinierten Fotostrom- und Temperaturmessung bereitzustellen, welche mit vergleichsweise geringem schaltungstechnischem Aufwand eine genaue und zuverlässige Temperaturmessung einer Fotodiode, z. B. bei einem optischen Gassensor, über einen vergleichsweise weiten Temperaturbereich erlauben.

Zur Lösung dieses Problems werden eine elektronische Anordnung, ein optischer Gassensor sowie ein Verfahren zur kombinierten Fotostrom- und Temperaturmessung gemäß den unabhängigen Patentansprüchen vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist. Dabei können die nachstehend beschriebenen Merkmale der elektronischen Anordnung entsprechend auch bei dem optischen Gassensor verwirklicht sein und umgekehrt. Ebenso können Merkmale des Verfahrens sich in Merkmalen elektronischen Anordnung und/oder des optischen Gassensors widerspiegeln wie auch umgekehrt.

Gemäß einem ersten Aspekt umfasst eine elektronische Anordnung eine Fotodiode und einen Transimpedanzverstärker. Die elektronische Anordnung ist selektiv in einen Fotostrommessmodus und in einen Temperaturmessmodus schaltbar. Dabei ist in dem Fotostrommessmodus ein Anodenanschluss der Fotodiode mit einem ersten Eingang eines Operationsverstärkers des Transimpedanzverstärkers verbunden, ein Kathodenanschluss der Fotodiode ist mit einem zweiten Eingang des Operationsverstärkers verbunden, und ein erster Vorspannungsanschluss ist mit dem ersten Eingang und mit dem Anodenanschluss verbunden. In dem Temperaturmessmodus ist der Anodenanschluss mit einem Masseanschluss verbunden, der Kathodenanschluss ist mit dem zweiten Eingang verbunden, und der erste Vorspannungsanschluss ist mit dem ersten Eingang verbunden und von dem ersten Anodenanschluss getrennt.

Im Rahmen der vorliegenden Anmeldung ist mit einer Aussage, wonach ein elektrisches Element mit einem anderen elektrischen Element "verbunden" ist gemeint, dass zwischen den beiden elektrischen Elementen eine niederohmige elektrische Verbindung vorliegt.

Ferner soll unter einer "Masse" eine Struktur verstanden werden, welche ein Referenzpotenzial bereitstellt. Dieses kann, muss aber nicht notwendigerweise das Erdpotenzial sein.

Ein zweiter Aspekt betrifft einen optischen Gassensor, der Folgendes umfasst: Eine Messzelle zur Aufnahme eines Gases; eine Strahlungsquelle zum Emittieren einer Strahlung auf das in der Messzelle aufgenommene Gas; und eine Fotodiode zur Detektion von zumindest Teilen der Strahlung, wobei sich das in der Messzelle aufgenommene Gas zumindest teilweise zwischen der Strahlungsquelle und der Fotodiode befindet. Zur kombinierten Fotostrom- und Temperaturmessung mittels der Fotodiode umfasst der optische Gassensor eine elektronische Anordnung gemäß dem ersten Erfindungsaspekt. Mit anderen Worten ist die zur Gasdetektion verwendete Fotodiode des optischen Gassensors zugleich eine Fotodiode einer elektronischen Anordnung gemäß dem ersten Erfindungsaspekt.

Ein dritter Aspekt sieht vor, dass ein Verfahren zur kombinierten Fotostrom- und Temperaturmessung die folgenden Schritte umfasst: Bereitstellen einer elektronischen Anordnung gemäß dem ersten Erfindungsaspekt; Betreiben der elektronischen Anordnung in einem der beiden Messmodi Fotostrommessmodus und Temperaturmessmodus; und Schalten der elektronischen Anordnung in den jeweils anderen von dem Fotostrommessmodus und dem Temperaturmessmodus.

Nachstehend wird auf alle drei vorstehend genannten Aspekte Bezug genommen werden.

Die Erfindung geht von dem Gedanken aus, dass sich eine elektronischen Anordnung, die eine Fotodiode und einen Transimpedanzverstärker umfasst, derart ausgestalten lässt, dass sie mit einem vergleichsweise geringen schaltungstechnischen Aufwand ein einfaches Umschalten zwischen einem Fotostrommessmodus und einem Temperaturmessmodus unterstützt. Dies kann realisiert werden, indem die elektronische Anordnung derart verschaltet wird, dass ein Anodenanschluss der Fotodiode in dem Fotostrommessmodus mit einem ersten Eingang des Operationsverstärkers verbunden ist und in dem Temperaturmessmodus mit einem Masseanschluss verbunden ist. Dabei ist ein Kathodenanschluss der Fotodiode in beiden genannten Modi mit einem zweiten Eingang des Operationsverstärkers verbunden. Zudem ist ein erster Vorspannungsanschluss in dem Fotostrommessmodus sowohl mit dem ersten Eingang als auch mit dem Anodenanschluss verbunden, wohingegen der erste Vorspannungsanschluss in dem Temperaturmessmodus mit dem ersten Eingang verbunden und von dem ersten Anodenanschluss getrennt ist.

Der Transimpedanzverstärker ist in beiden genannten Modi der elektronischen Anordnung zum Wandeln eines jeweiligen Diodenstroms der Fotodiode in eine Ausgangsspannung ausgebildet. Genauer gesagt ist in dem Fotostrommessmodus und dem Temperaturmessmodus zwischen dem ersten Vorspannungsanschluss und einem Ausgangsspannungsabgriff des Transimpedanzverstärkers, welcher mit einem Ausgang des Operationsverstärkers verbunden ist, eine zu dem jeweiligen Diodenstrom der Fotodiode proportionale Ausgangsspannung abgreifbar.

In dem Fotostrommessmodus ermöglicht der Operationsverstärker einen Betrieb der Fotodiode in einem Quasikurzschluss. Der Operationsverstärker kann ein Potenzial an dem zweiten Eingang zumindest annähernd auf den Wert eines an dem ersten Vorspannungsanschluss anliegenden Vorspannungspotenzials regeln. Mit anderen Worten ist der zweite Eingang ein invertierender Eingang des Operationsverstärkers, welcher eine sogenannte "virtuelle Masse" mit (zumindest annähernd) dem Vorspannungspotenzial als Referenzpotenzial bereitstellt. Da folglich in dem Fotostrommessmodus der Kathodenanschluss und der Anodenanschluss zumindest annähernd auf demselben Potenzial, nämlich dem Vorspannungspotenzial, gehalten werden, kann ein in der Fotodiode erzeugter Fotostrom im Quasikurzschluss fließen. Der Fotostrom kann entlang der negativen Ordinatenachse der Strom-Spannungscharakteristik der Fotodiode gemessen werden.

In dem Temperaturmessmodus befindet sich der Kathodenanschluss zumindest annähernd auf dem Vorspannungspotenzial, wohingegen der Anodenanschluss auf einem Referenzpotenzial des Masseanschlusses liegt. Im Fall eines positiven Vorspannungspotenzials liegt somit eine negative Vorspannung an der Fotodiode an, welche einen stark temperaturabhängigen Rückwärtsstrom durch die Fotodiode treibt. Der Rückwärtsstrom kann somit zur Bestimmung der Temperatur im dritten Quadranten der Strom-Spannungs-Charakteristik der Fotodiode gemessen werden.

In einer Ausführungsform umfasst die elektronische Anordnung eine Anzahl von Schaltelementen, mittels derer die elektronische Anordnung zwischen dem Fotostrommessmodus und dem Temperaturmessmodus schaltbar ist. Insbesondere kann die elektronische Anordnung derart eingerichtet sein, dass das Umschalten mittels dreier Schaltelemente ausgeführt wird.

Der Transimpedanzverstärker umfasst in einer Ausführungsform einen elektrischen Gegenkopplungspfad welcher parallel zu dem Operationsverstärker verläuft, und welcher den zweiten Eingang mit dem Ausgangsspannungsabgriff verbindet. Dabei sind in dem Gegenkopplungspfad ein Gegenkopplungsteilwiderstand $R_F'$ und ein erster Widerstand $R_1$ in Reihe geschaltet.

Zusätzlich umfasst die elektronische Anordnung in einer Weiterbildung einen zweiten Vorspannungsanschluss, der über ein erstes Schaltelement in einem Bereich zwischen dem Gegenkopplungsteilwiderstand $R_F'$ und dem ersten Widerstand $R_1$ an den Gegenkopplungspfad anschließbar ist. Das erste Schaltelement ist in dem Fotostrommessmodus geschlossen und in dem Temperaturmessmodus geöffnet. In einer Variante kann der zweite Vorspannungsanschluss dabei mit dem ersten Vorspannungsanschluss verbunden oder sogar mit diesem identisch sein.

Zwischen dem zweiten Vorspannungsanschluss und dem Gegenkopplungspfad ist bevorzugt ein zweiter Widerstand $R_2$ angeordnet. Der Kathodenanschluss ist dabei über das erste Schaltelement, den Gegenkopplungsteilwiderstand $R_F'$ und den zweiten Widerstand $R_2$ schaltbar mit dem zweiten Vorspannungsanschluss verbindbar. Auf diese Weise bilden der erste Wi-

derstand $R_1$ und der zweite Widerstand $R_2$ in dem Fotostrommessmodus einen Spannungsteiler aus, welcher die Ausgangsspannung des Operationsverstärkers reduziert. Es wird somit in dem Fotostrommessmodus ein Stromverstärker mit der Verstärkung

$$R_F' \cdot \left(1 + \frac{R_1}{R_2}\right)$$

realisiert.

Demgegenüber wirkt in dem Temperaturmessmodus an Stelle des zweiten Widerstands $R_2$ eine offene Verbindung, und die Verstärkung reduziert sich auf

$$R_F' + R_1.$$

In einer Ausführungsform ist der Anodenanschluss über ein zweites Schaltelement sowohl mit dem ersten Eingang als auch mit dem ersten Vorspannungsanschluss verbindbar. Das zweite Schaltelement ist in dem Fotostrommessmodus geschlossen und in dem Temperaturmessmodus geöffnet.

Ferner ist der Anodenanschluss bevorzugt über ein drittes Schaltelement mit einem Masseanschluss verbindbar. Dabei ist das dritte Schaltelement in dem Fotostrommessmodus geöffnet und in dem Temperaturmessmodus geschlossen. Mit anderen Worten können zum Schalten der elektronischen Anordnung in den Fotostrommessmodus das erste und das zweite Schaltelement geschlossen und das dritte Schaltelement geöffnet werden. Zum Schalten der elektronischen Anordnung in den Temperaturmessmodus können das erste und das zweite Schaltelement geöffnet und das dritte Schaltelement geschlossen werden.

Bei dem erfindungsgemäßen optischen Gassensor kann die Strahlungsquelle vorteilhaft zum Emittieren einer Infrarotstrahlung, insbesondere einer mittleren Infrarotstrahlung (MIR), z. B. mit Wellenlängen im Bereich von etwa 3-5 $\mu$m, ausgebildet sein. MIR-Strahlung eignet sich zur optischen Detektion von Gasen, wie z. B. $CO_2$.

Beim Betrieb einer elektronischen Anordnung, welche, wie oben beschrieben, zusätzlich zu dem ersten Vorspannungsanschluss einen zweiten Vorspannungsanschluss aufweist, wird bevorzugt an dem ersten Vorspannungsanschluss und an dem zweiten Vorspannungsanschluss dasselbe Vorspannungspotenzial bereitgestellt. Beispielsweise kann an dem ersten Vorspannungsanschluss und an dem zweiten Vorspannungsanschluss dasselbe positive Vorspannungspotenzial bereitgestellt werden.

Wenn die elektronische Anordnung Teil eines erfindungsgemäßen optischen Gassensors ist, kann vorgesehen sein, dass sie zuerst in dem Temperaturmessmodus betrieben wird, während die Strahlungsquelle ausgeschaltet ist, und sodann in dem Fotostrommessmodus betrieben wird, während die Strahlungsquelle eingeschaltet ist.

Weitere Einzelheiten und Vorteile der Erfindung werden bei der nachfolgenden Beschreibung einiger Ausführungsbeispiele anhand der Figuren deutlich werden.

Es zeigen:

Figur 1      exemplarisch und schematisch einen im Stand der Technik bekannten optischen Gassensor;

Figur 2      exemplarisch und schematisch eine im Stand der Technik bekannte elektronische Anordnung zur Fotostrommessung;

Figur 3      exemplarisch und schematisch eine Strom-Spannungs-Charakteristik einer Fotodiode mit Messpunkten für eine Temperaturmessung und eine Fotostrommessung gemäß einer oder mehrerer Ausführungsformen;

Figur 4A      exemplarisch und schematisch eine elektronische Anordnung in einem Fotostrommessmodus gemäß einer oder mehreren Ausführungsformen;

Figur 4B      exemplarisch und schematisch die elektronische Anordnung aus Fig. 4 in einem Temperaturmessmodus;

Fig. 5      exemplarisch und schematisch eine praktische Realisierung einer elektronischen Anordnung gemäß einer oder mehreren Ausführungsformen; und

Fig. 6      eine Schaltsequenz für eine kombinierte Fotostrom- und Temperaturmessung gemäß einer oder mehreren Ausführungsformen.

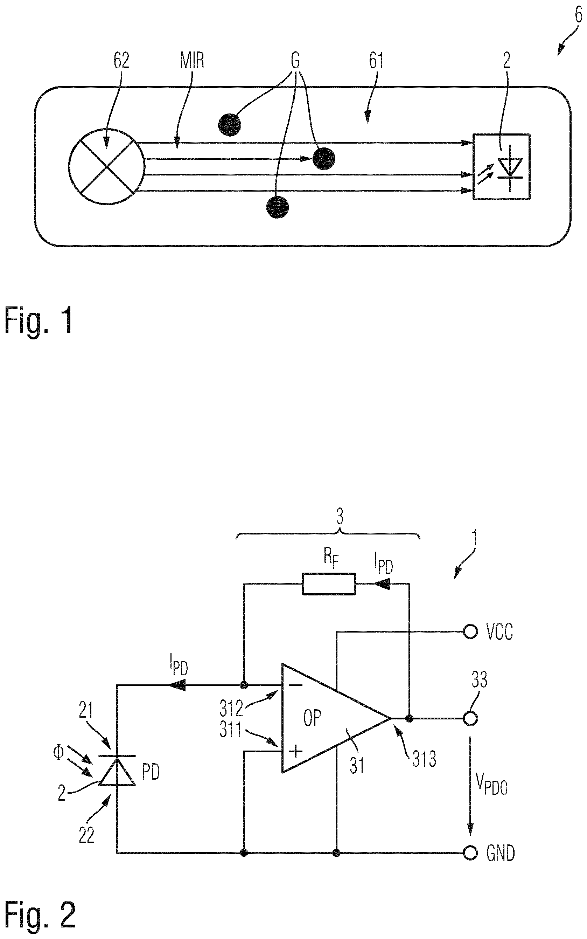

Die Figur 1 veranschaulicht schematisch und exemplarisch einen dem prinzipiellen Aufbau nach im Stand der Technik bekannten optischen Gassensor 6. Dabei wird von einer Infrarot-Strahlungsquelle 62, z. B. einer Glühlampe, Wärmestrahlung MIR emittiert. Zwischen einem Detektor (hier als Fotodiode 2 dargestellt) und der Strahlungsquelle 62 befindet sich die Messzelle 61 mit dem zu messenden Gas G, beispielsweise $CO_2$. Das Gas G absorbiert einen Teil der Wärmestrahlung MIR bei bestimmten Wellenlängen. Je nach Gaskonzentration liefert die Fotodiode 2 mehr oder weniger Fotostrom. Ein Signal der Fotodiode 2 kann somit zur Konzentrationsbestimmung des Gases verwendet werden.

In Figur 2 ist exemplarisch und schematisch eine elektronische Anordnung 1 zur Fotostrommessung dargestellt, die z. B. in einem optischen Gassensor 6 der obenstehend erläuterten Art zum Einsatz kommen kann.

Zur Fotostrommessung wird gewöhnlich ein Transimpedanzverstärker 3 (auch als "Stromverstärker" bezeichnet) verwendet, welcher zum Wandeln eines Fotodiodenstroms $I_{PD}$ der Fotodiode 2 in eine Ausgangsspannung $V_{PDO}$ ausgebildet ist. Der Transimpedanzverstärker 3 umfasst einen Operationsverstärker 31, wobei ein Anodenanschluss 22 der Fotodiode 2 mit einem ersten Eingang 311 des Operationsverstärkers 31 verbunden ist, und wobei ein Kathodenanschluss 21 der Fotodiode 2 mit einem zweiten Eingang 312 des Operationsverstärkers 31 verbunden ist.

Der zweite Eingang 312 ist ein invertierender Eingang des Operationsverstärkers 31. Das bedeutet, dass der Operationsverstärker 31 ausgebildet ist, ein Potenzial an dem zweiten Eingang 312 zumindest annähernd auf den Wert des an dem ersten Eingang 311 anliegenden Massepotenzials GND zu regeln und somit an dem zweiten Eingang 312 eine sogenannte virtuelle Masse zu erzeugen. Durch die virtuelle Masse wird die Fotodiode 2 in einem Quasikurzschluss betrieben.

Ein Gegenkopplungspfad, der parallel zu dem Operationsverstärker 31 verläuft, verbindet den zweiten Eingang 312 mit einem Ausgangsspannungsabgriff 33 des Transimpedanzverstärkers 31, welcher mit einem Ausgang 313 des Operationsverstärkers 31 verbunden ist, wobei in dem Gegenkopplungspfad ein Gegenkopplungswiderstand $R_F$ angeordnet ist. Zwischen einem Ausgangsspannungsabgriff 33 und der Masse GND ist beim Betrieb der Fotodiode 2 im Quasikurzschluss die Ausgangsspannung $V_{PDO}$ abgreifbar, welche linear von einer auf die Fotodiode 2 einfallenden Strahlungsleistung $\Phi$ und einem dadurch hervorgerufenen Fotodiodenstrom $I_{PD}$ abhängt. Dabei ist eine Verstärkung durch den Gegenkopplungswiderstand $R_F$ gegeben:

$$V_{PDO} = I_{PD} \cdot R_F.$$

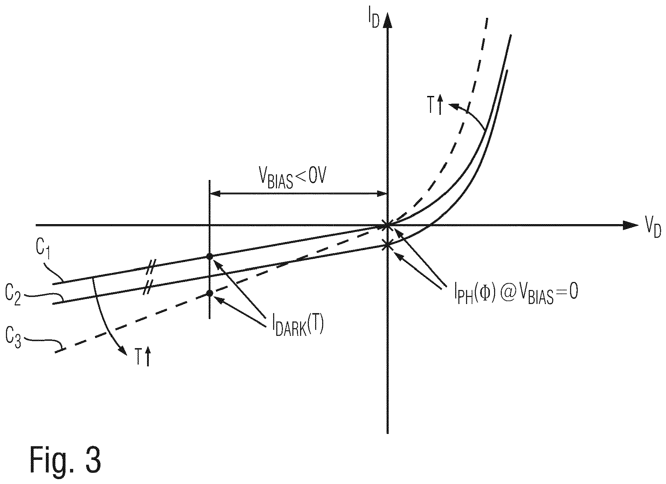

Die Figur 3 verdeutlicht das Prinzip der Fotostrommessung anhand einer Strom-Spannungs-Charakteristik welche den Diodenstrom $I_D$ (y-Achse) über die Diodenspannung $V_D$ (x-Achse) der Fotodiode 2 aufträgt. Die durch den Ursprung verlaufende Kurve $C_1$ entspricht einer Diodenkennlinie ohne Strahlungseinfall, d. h. im Dunkeln. Bei Bestrahlung der Fotodiode 2 durch eine Infrarotquelle 62 wird die Diodenkennlinie parallel nach unten verschoben, wie anhand der zweiten Kurve $C_2$ schematisch veranschaulicht. Der oben beschriebene (Quasi-)Kurzschlussbetrieb entspricht also einer Messung eines Fotostroms $I_{PH}$ auf der negativen y-Achse (beispielhafte Messpunkte sind mit "x" markiert). Typische Fotoströme $I_{PH}$ liegen, je nach Strahlungsquelle 62, Zellengeometrie, verwendetem optischem Filter, etc., in der Größenordnung von 10 nA. Dabei kann beispielsweise ein Gegenkopplungswiderstand $R_F$ von etwa 100 M$\Omega$ für eine Ausgangsspannung $V_{PDO}$ in Höhe von etwa 1 V verwendet werden. Dieser Fotostrom $I_{PH}$ zeigt eine starke Temperaturabhängigkeit.

Bei Temperaturänderungen (in Figur 3 durch das Symbol T$\uparrow$ angedeutet) dreht sich die Kennlinie der Fotodiode 2. Beispielsweise hat eine Temperaturerhöhung eine Drehung der Diodenkennlinie gegen den Uhrzeigersinn zur Folge, wie in Figur 3 schematisch anhand der strichlierten dritten Kurve C3 verdeutlicht. Zur Temperaturmessung kann nun beispielsweise ein Diodenstrom $I_D$ in Durchlassrichtung eingeprägt und die Spannung $V_D$ im 1. Quadranten (d.h. im Durchlassbereich) gemessen werden. Alternativ kann eine negative Vorspannung $V_{BIAS} < 0$ an die Fotodiode 2 angelegt und der temperaturabhängigen Dunkelstrom $I_{DARK}$ im 3. Quadranten (d. h. im Sperrbereich) gemessen werden. Beispielhafte Messpunkte sind in Figur 3 mit schwarzen Punkten markiert. Letztere Methode kann gut mit der zuvor beschriebenen Fotostrommessung kombiniert werden, weil ohnehin schon ein Stromverstärker 3 vorliegt.

Der Dunkelstrom $I_{DARK}$ steigt bei betragsmäßig kleinen Vorspannungen $V_{BIAS}$ näherungsweise linear mit dem Betrag der Vorspannung $|V_{BIAS}|$ (durch die Spannungsabhängigkeit der Sperrschichtweite) und exponentiell mit der Temperatur T an. Typische Werte des Dunkelstroms $I_{DARK}$ bei Raumtemperatur können beispielsweise um 120 kOhm liegen. Durch den geringen Quantenwirkungsgrad der MIR-Fotodiode 2 kann der temperaturabgängige Dunkelstrom $I_{DARK}$ (T) bereits bei wenigen mV Vorspannung so groß sein wie der Fotostrom $I_{PH}(\Phi)$ bei Bestrahlung ohne Vorspannung ($V_{BIAS}$ =0). Es kann daher vorteilhaft sein, wenn beim Messen des Fotostroms $I_{PH}$ die Vorspannung den $\mu$V-Bereich nicht überschreitet. Zur Messung bei niedrigen Frequenzen, etwa im Hz-Bereich, bietet sich die Verwendung eines Zero-Drift-Operationsverstärkers an.

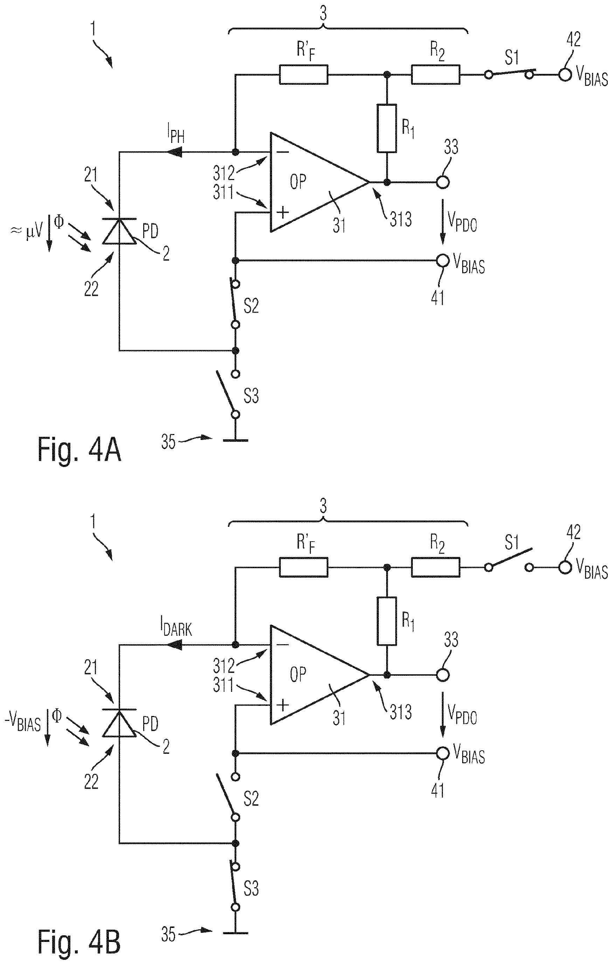

In den Figuren 4A und 4B ist schematisch eine erfindungsgemäße elektronische Anordnung 1 dargestellt, die die Fotostrom- und Temperaturmessung vereint. Die elektronische Anordnung weist im Vergleich zu der in Figur 2 gezeigten nur wenige zusätzliche Bauteile auf und ermöglicht ein einfaches Umschalten zwischen einem Temperaturmessmodus und einem Fotostrommessmodus.

Beispielsweise wird, wie vorstehend erläutert, eine MIR-Fotodiode 2 sowie ein Transimpedanzverstärker 3 verwendet, wobei der Transimpedanzverstärker 3 einen Operationsverstärker 31, z. B. in Form eines Zero-Drift-Operationsverstärkers, umfasst. In dem in Figur 4A gezeigten Fotostrommessmodus ist der Anodenanschluss 22 der Fotodiode 2 mit einem ersten Eingang 311 des Operationsverstärkers 31 verbunden, und der Kathodenanschluss 21 der Fotodiode 2 ist mit einem zweiten Eingang 312 des Operationsverstärkers 31 verbunden. Ferner ist ein erster Vorspannungsanschluss 41 der elektronischen Anordnung 1 mit dem ersten Eingang 311 und dem Anodenanschluss 22 verbunden. Der Transimpedanzverstärker 3 ist ausgebildet, einen Betrieb der Fotodiode 2 in einem Quasikurzschluss zu ermöglichen. Der Operationsverstärker 31 ist nämlich ausgebildet, ein Potenzial an dem zweiten Eingang 312 zumindest annähernd auf den Wert eines an dem ersten Vorspannungsanschluss 41 anliegenden Vorspannungspotenzials $V_{BIAS}$ zu regeln. Mit anderen Worten wird an dem zweiten Eingang 312 eine virtuelle Masse mit (zumindest annähernd) dem Vorspannungspotenzial $V_{BIAS}$ als Referenzpotenzial bereitgestellt.

In dem in Figur 4B dargestellten Temperaturmessmodus ist demgegenüber der Anodenanschluss 22 mit einem Masseanschluss 35 der elektronischen Anordnung 1 verbunden, der Kathodenanschluss 21 ist mit dem zweiten Eingang 312 verbunden ist, und der erste Vorspannungsanschluss 41 ist mit dem ersten Eingang 311 verbunden und von dem ersten Anodenanschluss 22 getrennt.

Sowohl in dem Fotostrommessmodus als auch in dem Temperaturmessmodus ist zwischen dem ersten Vorspannungsanschluss 41 und einem Ausgangsspannungsabgriff 33 des Transimpedanzverstärkers 3, welcher mit einem Ausgang 313 des Operationsverstärkers 31 verbunden ist, eine zu einem jeweiligen Diodenstrom $I_{PH}$, $I_{DARK}$ der Fotodiode 2 proportionale Ausgangsspannung $V_{PDO}$ abgreifbar.

Bei der elektronischen Anordnung 1 gemäß Figuren 4A-B umfasst der Transimpedanzverstärker 3 einen Gegenkopplungspfad, welcher parallel zu dem Operationsverstärker 31 verläuft und den zweiten Eingang 312 mit dem Ausgangsspannungsabgriff 33 verbindet. Dabei sind in dem Gegenkopplungspfad ein Gegenkopplungsteilwiderstand $R_F'$ und ein erster Widerstand $R_1$ in Reihe geschaltet. Ferner ist ein zweiter Vorspannungsanschluss 42 vorgesehen, der über ein erstes Schaltelement S1 in einem Bereich zwischen dem Gegenkopplungsteilwiderstand $R_F'$ und dem ersten Widerstand $R_1$ an den Gegenkopplungspfad anschließbar ist. Zwischen dem zweiten Vorspannungsanschluss 42 und dem Gegenkopplungspfad ist ein zweiter Widerstand $R_2$ angeordnet.

Der Kathodenanschluss 21 ist über den Gegenkopplungsteilwiderstand $R_F'$, den zweiten Widerstand $R_2$ und das erste Schaltelement S1, schaltbar mit dem zweiten Vorspannungsanschluss 42 verbindbar. Der Anodenanschluss 22 ist über ein zweites Schaltelement S2 sowohl mit dem ersten Eingang 311 als auch mit dem ersten Vorspannungsanschluss 41 verbindbar. Zudem ist der Anodenanschluss 22 über ein drittes Schaltelement S3 mit einem Masseanschluss 35 verbindbar.

Durch Betätigung der drei Schaltelemente S1, S2, S3 kann die elektronische Anordnung 1 zwischen dem Fotostrommessmodus und dem Temperaturmessmodus umgeschaltet werden. Der Betrieb der elektronischen Anordnung 1 in dem Fotostrommessmodus bzw. in dem Temperaturmessmodus kann dabei z. B. auf die folgende Weise erfolgen:

In dem Fotostrommessmodus (vgl. Figur 4A) sind das erste Schaltelement S1 und das zweite Schaltelement S2 geschlossen, wohingegen das dritte Schaltelement S3 geöffnet ist. Das von außen an dem ersten Vorspannungsanschluss 41 und an dem zweiten Vorspannungsanschluss 42 angelegte Vorspannungspotenzial $V_{BIAS}$ wird vorzugsweise so gewählt, dass der Operationsverstärker 31 auch in einem Worst-Case-Fall (d. h. z. B. unter Berücksichtigung von möglichen Offsets oder Ruheströmen) bei gegebenen Widerständen $R_1$, $R_2$, $R_F'$ nicht in seine obere oder untere Begrenzung geht. Das Potenzial an dem Anodenanschluss 22 der Fotodiode 2 ist gleich dem Vorspannungspotenzial $V_{BIAS}$. Durch das Regelverhalten des Operationsverstärkers 3 (virtuelle Masse) liegt auch an dem Kathodenanschluss 21 im Wesentlichen das Vorspannungspotenzial $V_{BIAS}$ an, so dass die Fotodiode 2 im Quasikurzschluss betrieben wird. $R_1$ bildet mit $R_2$ einen Spannungsteiler, der die Ausgangsspannung $V_{PDO}$ reduziert. In Kombination mit dem Gegenkopplungsteilwiderstand $R_F'$ erhält man einen Stromverstärker mit der Verstärkung

$$R_F' \cdot \left( 1 + \frac{R_1}{R_2} \right).$$

Wird in dem Fotostrommessmodus eine Strahlungsquelle 62 (vgl. Figur 1) verwendet, so kann aus dem Ausgangsspannungssignal $V_{PDO}$ auf die Gaskonzentration in der Messzelle 61 geschlossen werden.

In dem Temperaturmessmodus (vgl. Figur 4B) sind das erste Schaltelement S1 und das zweite Schaltelement S2 geöffnet, und das dritte Schaltelement S3 ist geschlossen. Der Anodenanschluss 22 der Fotodiode 2 ist mit dem Masseanschluss 35 verbunden. Vorzugsweise wird das Vorspannungspotenzial $V_{BIAS}$ so gewählt, dass der Operationsverstärker 31 bei den gewählten Widerständen $R_F'$, $R_1$ aufgrund des Dunkelstroms $I_{DARK}$ nicht in seine obere Begrenzung geht. An dem ersten Eingang 311 des Operationsverstärkers 31 liegt das (positive) Vorspannungspotenzial $V_{BIAS}$ an. Durch die virtuelle Masse des Operationsverstärkers 31 liegt nun effektiv eine negative Vorspannung der Höhe $-V_{BIAS}$ an der Fotodiode 2 an. Im Vergleich zu dem Fotostrommessmodus reduziert sich die Verstärkung der Ausgangsspannung $V_{PDO}$ auf

$$R_F' + R_1.$$

In diesem Betriebsmodus bleibt die Strahlungsquelle 62 vorzugsweise ausgeschaltet. Das Ausgangsspannungssignal $V_{PDO}$ hängt von der Temperatur der Fotodiode 2 ab.

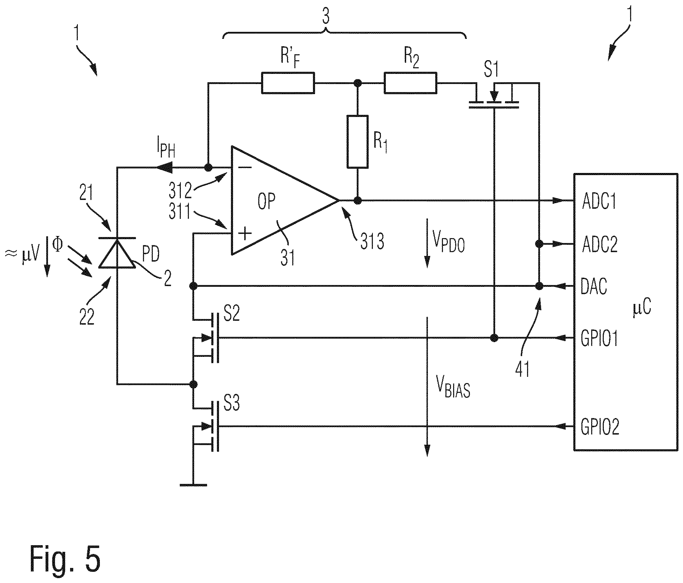

Die Figur 5 veranschaulicht beispielhaft eine praktische Umsetzung der vorstehend beschriebenen elektronischen Anordnung 1. Die Schaltelemente S1, S2, S3 sind in diesem Beispiel als MOSFETs ausgeführt, die über GPIO (General Purpose Input/Output)-Ausgänge GPIO1, GPIO2 eines Mikrocontrollers $\mu$C ein- oder ausgeschaltet werden. Das Vorspannungspotenzial $V_{BIAS}$

wird durch einen gepufferten DAC (digital-to-analog converter)-Ausgang DAC des Mikrocontrollers µC erzeugt. Es ist auch möglich, eine Referenz zu verwenden, die zwischen zwei unterschiedlichen konstanten Spannungswerten umschalten kann. Die Schaltung kann aber auch so dimensioniert werden, dass das Vorspannungspotenzial $V_{BIAS}$ für Fotostrom- und Temperaturmessung gleich bleibt. In diesem Fall kann eine einfache Referenz verwendet werden. Für die Messung des Ausgangsspannungssignals $V_{PDO}$ werden zwei ADC (analog-to-digital converter)-Eingänge ADC1, ADC2 verwendet. Der Microcontroller µC berechnet die Differenz der beiden Werte. Es kann aber auch ein ADC mit differentiellem Eingang verwendet werden. Die Schaltung kann dabei durch geeignete Wahl der Widerstände $R_1$, $R_2$, $R_F'$ so angepasst werden, dass bei beiden Messungen (Fotostrom und Temperatur) der ADC optimal, d.h. in einem maximalen Dynamikbereich, ausgenutzt wird. In einer (nicht dargestellten) Variante kann das dritte Schaltelement S3 auch direkt durch einen Open-Drain-Ausgang des Mikrocontrollers µC ersetzt werden. Abbildung 5 zeigt eine Schaltung für eine einzelne Fotodiode 2. Für einen optischen Gassensor 6 mit Dual-Detektor (Gas-Fotodiode und Referenz-Fotodiode) kann die Schaltung zweimal aufgebaut werden, wobei das zweite Schaltelement S2 und das dritte Schaltelement S3 für beide Schaltungen gemeinsam genutzt werden können.

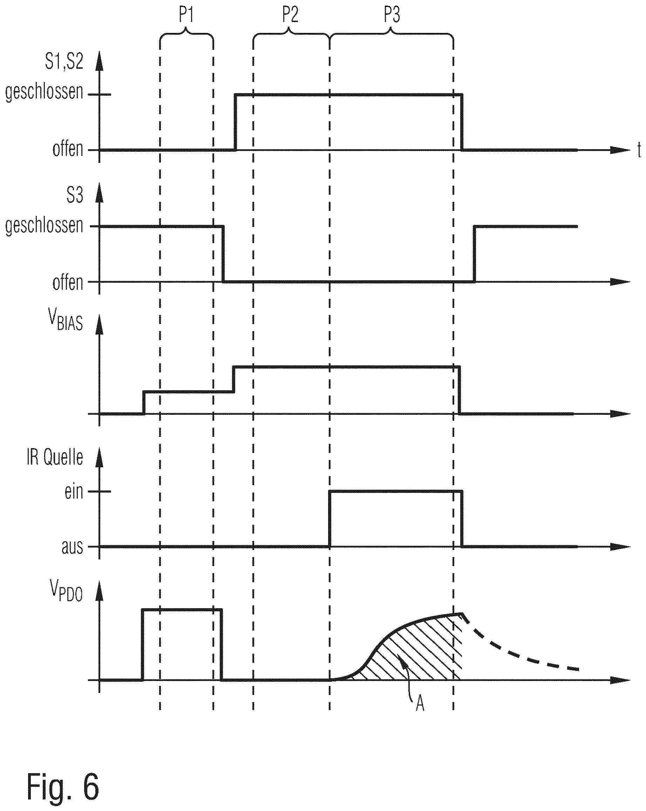

Die Figur 6 veranschaulicht den Messablauf für eine kombinierte Fotostrom- und Temperaturmessung anhand einer beispielhafte Schaltsequenz der Schaltelemente S1, S2, S3. Über einer Zeitachse t ist dabei der jeweilige Schaltzustand der Schaltelemente S1, S2, S3 sowie der entsprechende zeitliche Verlauf des Vorspannungspotenzials $V_{BIAS}$, des Ein-/Aus-Zustands der Strahlungsquelle 62 und des resultierenden Ausgangsspannungssignals $V_{PDO}$ dargestellt.

Zunächst befindet sich der optische Gassensor 6 im Stand-By-Modus. Das erste Schaltelement S1 und das zweite Schaltelement S2 sind offen, während das dritte Schaltelement S3 geschlossen ist (Funktion als Temperatursensor). Es liegt keine Vorspannung $V_{BIAS}$ an. Die Infrarot-Strahlungsquelle 62 ist ausgeschaltet.

Im ersten Schritt wird sodann ein (positives) Vorspannungspotenzial $V_{BIAS}$ für die Temperaturmessung angelegt. Nach kurzer Stabilisierungszeit liefert das Ausgangsspannungssignal $V_{PDO}$ ein zur Temperatur proportionales Signal. Diese erste Phase P1 entspricht somit der Temperaturmessung.

Nach erfolgter Temperaturmessung wird das dritte Schaltelement S3 geöffnet, und die Schaltelemente S1 und S2 werden geschlossen. Die Vorspannung $V_{BIAS}$ kann, falls erforderlich, auf einen anderen Wert umgeschaltet werden. Die elektronische Anordnung 1 funktioniert nun als Fotostromsensor. Zunächst ist die Infrarot-Strahlungsquelle 62 noch ausgeschaltet. Man kann die zweite Phase P2 beispielsweise zur Messung eines Gas-Ruhesignals verwenden. Hierdurch kann später z. B. ein möglicher Schaltungs-Offset kompensiert werden.

In der dritten Phase P3 wird die Infrarot-Strahlungsquelle 62 eingeschaltet. Mit der Erwärmung der Infrarot-Strahlungsquelle 62 beginnt das Ausgangsspannungssignal $V_{PDO}$ zu steigen. Je nach Gaskonzentration steigt das Ausgangsspannungssignal $V_{PDO}$ mehr oder weniger an. Eine Fläche A unter der Ausgangsspannungskurve kann z. B. als Ausgangsgröße für eine Berechnung der Gaskonzentration herangezogen werden. Aus beiden Signalen, d. h. aus der Detektortemperatur und der Antwort auf einen Strahlungsimpuls, kann sodann mit Hilfe des Mikrocontrollers µC eine temperaturkompensierte Gaskonzentration ermittelt werden.

Der Messablauf gemäß Figur 6 ist nur ein mögliches Beispiel. Die Bestimmung der Gaskonzentration kann auch nach einem anderen Schema erfolgen, z. B. durch ein mehrmaliges Blinken der Strahlungsquelle 62 hintereinander oder unter Verwendung anderer Parameter als die Fläche unter der Ausgangsspannungskurve (z. B. basierend auf einer FFT-Analyse, einer Steigung zu einem bestimmtem Zeitpunkt, etc.).

Werden bei einem optischen Gassensor der beschriebenen Art zwei oder mehr Fotodioden (z. B. als Dual-Detektor) verwendet, so lassen sich durch die Messung der verschiedenen Fotodiodentemperaturen auch mögliche Temperaturgradienten zwischen den Fotodioden feststellen und kompensieren. Die mittlere Temperatur der verschiedenen Fotodioden (und/oder einer Temperatur eines NTC-Fühlers bzw. eines Mikrocontrollers) kann beispielsweise als Schätzer für die Gastemperatur herangezogen werden, welcher zuverlässiger ist als die herkömmlich herangezogene Temperatur eines einzelnen NTC-Fühlers.

## Patentansprüche

1.  Elektronische Anordnung (1), umfassend eine Fotodiode (2) und einen Transimpedanzverstärker (3), **dadurch gekennzeichnet, dass** die elektronische Anordnung (1) selektiv in einen Fotostrommessmodus und in einen Temperaturmessmodus schaltbar ist, wobei

    - in dem Fotostrommessmodus

        - ein Anodenanschluss (22) der Fotodiode (2) mit einem ersten Eingang (311) eines Operationsverstärkers (31) des Transimpedanzverstärkers (3) verbunden ist,
        - ein Kathodenanschluss (21) der Fotodiode (2) mit einem zweiten Eingang (312) des Operationsverstärkers (31) verbunden ist, und
        - ein erster Vorspannungsanschluss (41) der elektronischen Anordnung (1) mit dem ersten Eingang (311) und dem Anodenanschluss (22) verbunden ist, und

- in dem Temperaturmessmodus

  - der Anodenanschluss (22) mit einem Masseanschluss (35) der elektronischen Anordnung (1) verbunden ist,
  - der Kathodenanschluss (21) mit dem zweiten Eingang (312) des Operationsverstärkers (31) verbunden ist, und
  - der erste Vorspannungsanschluss (41) mit dem ersten Eingang (311) verbunden und von dem Anodenanschluss (22) getrennt ist.

2. Elektronische Anordnung (1) nach Anspruch 1, **dadurch gekennzeichnet, dass** in dem Fotostrommessmodus und dem Temperaturmessmodus zwischen dem ersten Vorspannungsanschluss (41) und einem Ausgangsspannungsabgriff (33) des Transimpedanzverstärkers (3) eine zu einem jeweiligen Diodenstrom ($I_{PH}$, $I_{DARK}$) der Fotodiode (2) proportionale Ausgangsspannung ($V_{PDO}$) abgreifbar ist.

3. Elektronische Anordnung (1) nach einem der vorangehenden Ansprüche, **dadurch gekennzeichnet, dass** der zweite Eingang (312) ein invertierender Eingang des Operationsverstärkers (31) ist.

4. Elektronische Anordnung (1) nach einem der vorangehenden Ansprüche, **dadurch gekennzeichnet, dass** der Operationsverstärker (31) ausgebildet ist, ein Potenzial an dem zweiten Eingang (312) zumindest annähernd auf den Wert eines an dem ersten Vorspannungsanschluss (41) anliegenden Vorspannungspotenzials ($V_{BIAS}$) zu regeln.

5. Elektronische Anordnung (1) nach einem der vorangehenden Ansprüche, **dadurch gekennzeichnet, dass** der Transimpedanzverstärker (3) einen Gegenkopplungspfad, welcher parallel zu dem Operationsverstärker (31) verläuft und den zweiten Eingang (312) mit dem Ausgangsspannungsabgriff (33) verbindet, umfasst, wobei in dem Gegenkopplungspfad ein Gegenkopplungsteilwiderstand ($R_F'$) und ein erster Widerstand ($R_1$) in Reihe geschaltet sind.

6. Elektronische Anordnung (1) nach Anspruch 5, **dadurch gekennzeichnet, dass** der erste Vorspannungsanschluss (41) oder ein zweiter Vorspannungsanschluss (42) der elektronischen Anordnung (1) über ein erstes Schaltelement (S1) in einem Bereich zwischen dem Gegenkopplungsteilwiderstand ($R_F'$) und dem ersten Widerstand ($R_1$) an den Gegenkopplungspfad anschließbar ist.

7. Elektronische Anordnung (1) nach Anspruch 6, **dadurch gekennzeichnet, dass** zwischen dem ersten Vorspannungsanschluss (41) bzw. dem zweiten Vorspannungsanschluss (42) und dem Gegenkopplungspfad ein zweiter Widerstand (R2) angeordnet ist.

8. Elektronische Anordnung (1) nach einem der Ansprüche 6 oder 7, **dadurch gekennzeichnet, dass** der Kathodenanschluss (21) über das erste Schaltelement (S1) schaltbar mit dem ersten Vorspannungsanschluss (41) bzw. mit dem zweiten Vorspannungsanschluss (42) verbindbar ist.

9. Elektronische Anordnung (1) nach einem der vorangehenden Ansprüche, **dadurch gekennzeichnet, dass** der Anodenanschluss (22) über ein zweites Schaltelement (S2) sowohl mit dem ersten Eingang (311) als auch mit dem ersten Vorspannungsanschluss (41) verbindbar ist.

10. Elektronische Anordnung (1) nach einem der vorangehenden Ansprüche, **dadurch gekennzeichnet, dass** der Anodenanschluss (22) über ein drittes Schaltelement (S3) mit einem Masseanschluss (35) der elektronischen Anordnung (1) verbindbar ist.

11. Optischer Gassensor (6), umfassend

    - eine Messzelle (61) zur Aufnahme eines Gases,
    - eine Strahlungsquelle (62) zum Emittieren einer Strahlung auf das in der Messzelle (61) aufgenommene Gas, und
    - eine Fotodiode (2) zur Detektion von zumindest Teilen der Strahlung, wobei sich das in der Messzelle (61) aufgenommene Gas zumindest teilweise zwischen der Strahlungsquelle (62) und der Fotodiode (2) befindet,

    **dadurch gekennzeichnet, dass**
    der optische Gassensor (6) zur kombinierten Fotostrom- und Temperaturmessung mittels der Fotodiode (2) eine elektronische Anordnung (1) nach einem der vorangehenden Ansprüche umfasst.

12. Verfahren zur kombinierten Fotostrom- und Temperaturmessung, **gekennzeichnet durch** die folgenden Schritte:

    - Bereitstellen einer elektronischen Anordnung (1) nach einem der Ansprüche 1 bis 10;
    - Betreiben der elektronischen Anordnung (1) in einem der beiden Messmodi Fotostrommessmodus und Temperaturmessmodus; und
    - Schalten der elektronischen Anordnung (1) in den jeweils anderen von dem Fotostrommessmodus und dem Temperaturmessmodus.

13. Verfahren nach Anspruch 12, **dadurch gekennzeichnet, dass** eine elektronische Anordnung (1) nach einem der Ansprüche 6 bis 10 bereitgestellt wird, wobei an dem ersten Vorspannungsanschluss (41) und an dem zweiten Vorspannungsanschluss (42) dasselbe Vorspannungspotenzial ($V_{BIAS}$) bereitgestellt wird.

14. Verfahren nach Anspruch 12 oder 13, **dadurch gekennzeichnet, dass** eine elektronische Anordnung (1) nach Anspruch 10, insoweit dieser auf Anspruch und 9 sowie auf einen der Ansprüche 6 bis 8 rückbezogen ist, bereitgestellt wird, wobei

- zum Schalten der elektronischen Anordnung (1) in den Fotostrommessmodus das erste und das zweite Schaltelement (S1, S2) geschlossen werden und das dritte Schaltelement (S3) geöffnet wird; und/oder
- zum Schalten der elektronischen Anordnung (1) in den Temperaturmessmodus das erste und das zweite Schaltelement (S1, S2) geöffnet werden und das dritte Schaltelement (S3) geschlossen wird.

15. Verfahren nach einem der Ansprüche 12 bis 14, **dadurch gekennzeichnet, dass** die elektronische Anordnung (1) Teil eines optischen Gassensors (6) nach Anspruch 11 ist und

- zuerst in dem Temperaturmessmodus betrieben wird, während die Strahlungsquelle (62) ausgeschaltet ist, und
- sodann in dem Fotostrommessmodus betrieben wird, während die Strahlungsquelle (62) eingeschaltet ist.

**Claims**

1. Electronic arrangement (1), comprising a photodiode (2) and a transimpedance amplifier (3), **characterized in that** the electronic arrangement (1) is selectively switchable into a photocurrent measurement mode and into a temperature measurement mode, wherein

- in the photocurrent measurement mode

  - an anode terminal (22) of the photodiode (2) is connected to a first input (311) of an operational amplifier (31) of the transimpedance amplifier (3),
  - a cathode terminal (21) of the photodiode (2) is connected to a second input (312) of the operational amplifier (31), and
  - a first bias voltage terminal (41) of the electronic arrangement (1) is connected to the first input (311) and the anode terminal (22), and

- in the temperature measurement mode

  - the anode terminal (22) is connected to an earth terminal (35) of the electronic arrangement (1),
  - the cathode terminal (21) is connected to the second input (312) of the operational amplifier (31), and
  - the first bias voltage terminal (41) is connected to the first input (311) and is disconnected from the anode terminal (22).

2. Electronic arrangement (1) according to Claim 1, **characterized in that,** in the photocurrent measurement mode and the temperature measurement mode, an output voltage ($V_{PDO}$) proportional to a respective diode current ($I_{PH}$, $I_{DARK}$) of the photodiode (2) is able to be tapped off between the first bias voltage terminal (41) and an output voltage tap (33) of the transimpedance amplifier (3) .

3. Electronic arrangement (1) according to either of the preceding claims, **characterized in that** the second input (312) is an inverting input of the operational amplifier (31).

4. Electronic arrangement (1) according to any of the preceding claims, **characterized in that** the operational amplifier (31) is configured to regulate a potential at the second input (312) at least approximately to the value of a bias voltage potential ($V_{BIAS}$) present at the first bias voltage terminal (41).

5. Electronic arrangement (1) according to any of the preceding claims, **characterized in that** the transimpedance amplifier (3) comprises a negative feedback path running in parallel with the operational amplifier (31) and connecting the second input (312) to the output voltage tap (33), wherein a negative feedback partial resistor ($R_F$') and a first resistor ($R_1$) are connected in series in the negative feedback path.

6. Electronic arrangement (1) according to Claim 5, **characterized in that** the first bias voltage terminal (41) or a second bias voltage terminal (42) of the electronic arrangement (1) is connectable to the negative feedback path via a first switching element (S1) in a region between the negative feedback partial resistor ($R_F$') and the first resistor ($R_1$).

7. Electronic arrangement (1) according to Claim 6, **characterized in that** a second resistor (R2) is arranged between the first bias voltage terminal (41) or respectively the second bias voltage terminal (42) and the negative feedback path.

8. Electronic arrangement (1) according to either of Claims 6 and 7, **characterized in that** the cathode terminal (21) is switchably connectable to the first bias voltage terminal (41) or respectively to the second bias voltage terminal (42) via the first switching element (S1).

9. Electronic arrangement (1) according to any of the preceding claims, **characterized in that** the anode terminal (22) is connectable both to the first input (311) and to the first bias voltage terminal (41) via a second switching element (S2).

10. Electronic arrangement (1) according to any of the preceding claims, **characterized in that** the anode terminal (22) is connectable to an earth terminal (35) of the electronic arrangement (1) via a third switching element (S3).

11. Optical gas sensor (6), comprising

   - a measurement cell (61) for receiving a gas,
   - a radiation source (62) for emitting radiation onto the gas received in the measurement cell (61), and
   - a photodiode (2) for detecting at least portions of the radiation, wherein the gas received in the measurement cell (61) is situated at least partly between the radiation source (62) and the photodiode (2),

   **characterized in that**
   for combined photocurrent and temperature measurement by means of the photodiode (2), the optical gas sensor (6) comprises an electronic arrangement (1) according to any of the preceding claims.

12. Method for combined photocurrent and temperature measurement, **characterized by** the following steps:

   - providing an electronic arrangement (1) according to any of Claims 1 to 10;
   - operating the electronic arrangement (1) in one of the two measurement modes photocurrent measurement mode and temperature measurement mode; and
   - switching the electronic arrangement (1) into the respective other mode of the modes photocurrent measurement mode and temperature measurement mode.

13. Method according to Claim 12, **characterized in that** an electronic arrangement (1) according to any of Claims 6 to 10 is provided, wherein the same bias voltage potential ($V_{BIAS}$) is provided at the first bias voltage terminal (41) and at the second bias voltage terminal (42).

14. Method according to Claim 12 or 13, **characterized**

**in that** an electronic arrangement (1) according to Claim 10, in so far as the latter refers back to Claim and 9 and to any of Claims 6 to 8, is provided, wherein

   - in order to switch the electronic arrangement (1) into the photocurrent measurement mode, the first and second switching elements (S1, S2) are closed and the third switching element (S3) is opened; and/or
   - in order to switch the electronic arrangement (1) into the temperature measurement mode, the first and second switching elements (S1, S2) are opened and the third switching element (S3) is closed.

15. Method according to any of Claims 12 to 14, **characterized in that** the electronic arrangement (1) is part of an optical gas sensor (6) according to Claim 11 and

   - firstly is operated in the temperature measurement mode while the radiation source (62) is switched off, and
   - then is operated in the photocurrent measurement mode while the radiation source (62) is switched on.

**Revendications**

1. Dispositif électronique (1), comprenant une photodiode (2) et un amplificateur à transimpédance (3), **caractérisé en ce que** le dispositif électronique (1) peut être commuté sélectivement sur un mode de mesure de courant photoélectrique et un mode de mesure de température, dans lequel

   - en mode de mesure de courant photoélectrique,

      - une borne d'anode (22) de la photodiode (2) est reliée à une première entrée (311) d'un amplificateur opérationnel (31) de l'amplificateur à transimpédance (3),
      - une borne de cathode (21) de la photodiode (2) est reliée à une deuxième entrée (312) de l'amplificateur opérationnel (31), et
      - une première borne de polarisation (41) du dispositif électronique (1) est reliée à la première entrée (311) et à la borne d'anode (22), et

   - en mode de mesure de température,

      - la borne d'anode (22) est reliée à une borne de masse (35) du dispositif électronique (1),
      - la borne de cathode (21) est reliée à la deuxième entrée (312) de l'amplificateur opérationnel (31), et
- la première borne de polarisation (41) est reliée à la première entrée (311) et est séparée de la borne d'anode (22).

**2.** Dispositif électronique (1) selon la revendication 1, **caractérisé en ce que** dans le mode de mesure de courant photoélectrique et dans le mode de mesure de température, il est possible de prélever une tension de sortie ($V_{PDO}$) proportionnelle à un courant de diode respectif ($I_{PH}$, $I_{DARK}$) de la photodiode (2), entre la première borne de polarisation (41) et une prise de tension de sortie (33) de l'amplificateur à transimpédance (3).

**3.** Dispositif électronique (1) selon l'une quelconque des revendications précédentes, **caractérisé en ce que** la deuxième entrée (312) est une entrée inverseuse de l'amplificateur opérationnel (31).

**4.** Dispositif électronique (1) selon l'une quelconque des revendications précédentes, **caractérisé en ce que** l'amplificateur opérationnel (31) est réalisé pour régler un potentiel à la deuxième entrée (312) au moins approximativement sur la valeur d'un potentiel de polarisation ($V_{BIAS}$) appliqué à la première borne de polarisation (41).

**5.** Dispositif électronique (1) selon l'une quelconque des revendications précédentes, **caractérisé en ce que** l'amplificateur à transimpédance (3) comprend un trajet de contre-réaction s'étendant en parallèle à l'amplificateur opérationnel (31) et connectant la deuxième entrée (312) à la prise de tension de sortie (33), une résistance partielle de contre-réaction ($R_F$') et une première résistance ($R_1$) étant connectées en série sur le trajet de contre-réaction.

**6.** Dispositif électronique (1) selon la revendication 5, **caractérisé en ce que** la première borne de polarisation (41) ou une deuxième borne de polarisation (42) du dispositif électronique (1) peut être connectée au trajet de contre-réaction par l'intermédiaire d'un premier élément de commutation (S1) dans une zone entre la résistance partielle de contre-réaction ($R_F$') et la première résistance ($R_1$).

**7.** Dispositif électronique (1) selon la revendication 6, **caractérisé en ce qu'**une deuxième résistance (R2) est disposée entre la première borne de polarisation (41) ou la deuxième borne de polarisation (42) et le trajet de contre-réaction.

**8.** Dispositif électronique (1) selon l'une quelconque des revendications 6 ou 7, **caractérisé en ce que** la borne de cathode (21) peut être reliée de manière commutable à la première borne de polarisation (41) ou à la deuxième borne de polarisation (42) par l'intermédiaire du premier élément de commutation (S1).

**9.** Dispositif électronique (1) selon l'une quelconque des revendications précédentes, **caractérisé en ce que** la borne d'anode (22) peut être reliée à la fois à la première entrée (311) et à la première borne de polarisation (41) par l'intermédiaire d'un deuxième élément de commutation (S2).

**10.** Dispositif électronique (1) selon l'une quelconque des revendications précédentes, **caractérisé en ce que** la borne d'anode (22) peut être reliée à une borne de masse (35) du dispositif électronique (1) par l'intermédiaire d'un troisième élément de commutation (S3).

**11.** Détecteur optique de gaz (6), comprenant

- une cellule de mesure (61) pour recevoir un gaz,
- une source de rayonnement (62) pour émettre un rayonnement sur le gaz reçu dans la cellule de mesure (61), et
- une photodiode (2) pour détecter au moins des fractions du rayonnement, le gaz reçu dans la cellule de mesure (61) se trouvant au moins en partie entre la source de rayonnement (62) et la photodiode (2),

**caractérisé en ce que** le détecteur optique de gaz (6) comprend pour la mesure combinée du courant photoélectrique et de la température au moyen de la photodiode (2) un dispositif électronique (1) selon l'une quelconque des revendications précédentes.

**12.** Procédé de mesure combinée de courant photoélectrique et de température, **caractérisé par** les étapes suivantes consistant à :

- fournir un dispositif électronique (1) selon l'une quelconque des revendications 1 à 10 ;
- exploiter le dispositif électronique (1) dans l'un des deux modes de mesure, le mode de mesure de courant photoélectrique et le mode de mesure de température ; et
- commuter le dispositif électronique (1) respectivement sur l'autre mode du mode de mesure de courant photoélectrique et du mode de mesure de température.

**13.** Procédé selon la revendication 12, **caractérisé en ce qu'**un dispositif électronique (1) selon l'une quelconque des revendications 6 à 10 est fourni, dans lequel le même potentiel de polarisation ($V_{BIAS}$) est fourni à la première borne de polarisation (41) et à la deuxième borne de polarisation (42).

**14.** Procédé selon la revendication 12 ou 13, **caractérisé en ce qu'**un dispositif électronique (1) selon la revendication 10, dans la mesure où elle dépend de la revendication et 9 ainsi que de l'une des revendications 6 à 8, est fourni, dans lequel

- pour commuter le dispositif électronique (1) sur le mode de mesure de courant photoélectrique, les premier et deuxième éléments de commutation (S1, S2) sont fermés et le troisième élément de commutation (S3) est ouvert ; et/ou
- pour commuter le dispositif électronique (1) sur le mode de mesure de température, les premier et deuxième éléments de commutation (S1, S2) sont ouverts et le troisième élément de commutation (S3) est fermé.

**15.** Procédé selon l'une quelconque des revendications 12 à 14, **caractérisé en ce que** le dispositif électronique (1) fait partie d'un détecteur optique de gaz (6) selon la revendication 11, et

- est d'abord exploité en mode de mesure de température alors que la source de rayonnement (62) est mise hors tension, et
- est ensuite exploité en mode de mesure de courant photoélectrique alors que la source de rayonnement (62) est mise sous tension.

Fig. 1

Fig. 2

Fig. 3

Fig. 4A

Fig. 4B

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009019467 A1
- DE 102012007016 B3
- EP 3051274 A1
- US 2004052299 A1
- DE 102004049855 B3